# EUROPÄISCHE PATENTANMELDUNG

(11) **EP 4 708 614 A1**
(43) Veröffentlichungstag der Anmeldung: **11.03.2026**
(21) Anmeldenummer: 25000077.5
(22) Anmeldetag: 23.07.2025
(51) Int. Cl.: H02J 7/00

(54) **BATTERIE-ENTLADEVORRICHTUNG UND VERFAHREN ZUM ENTLADEN MEHRERER BATTERIEN**

(30) Priorität: 27.07.2024 DE 102024002447
(71) Anmelder: ekon GmbH Ingenieurtechnik und Energiesysteme, 08060 Zwickau (DE)
(72) Erfinder: LIPPMANN, Steffen, 08066 Zwickau (DE)
(74) Vertreter: Auerbach, Bettina

(57) **Zusammenfassung**

Die vorliegende Erfindung betrifft eine Batterie-Entladevorrichtung mit mehreren Batterieanschlüssen, an denen sich jeweils wenigstens eine Batterie anschließen lässt; wenigstens einer elektrischen Last, die elektrisch mit den Batterieanschlüssen verbunden oder verbindbar ist; einer Steuereinrichtung, die ausgebildet ist, um die Batterieanschlüsse in Abhängigkeit von einer Entladespannung mit der wenigstens einen elektrischen Last zu verbinden, wobei jeder Batterieanschluss einen mit der Steuereinrichtung verbundenen Schalter aufweist, über den der jeweilige Batterieanschluss elektrisch mit der wenigstens einen elektrischen Last verbunden oder verbindbar ist. Es ist die Aufgabe der vorliegenden Erfindung, ein vereinfachtes Verfahren und eine vereinfachte Entladevorrichtung vorzuschlagen, mit der sich beliebig viele Altbatterien gleichzeitig und sicher entladen lassen. Die Aufgabe wird durch eine gattungsgemäße Batterie-Entladevorrichtung gelöst, wobei die Batterieanschlüsse parallel zueinander geschalten sind.

## Beschreibung

Die vorliegende Erfindung betrifft eine Batterie-Entladevorrichtung mit mehreren Batterieanschlüssen, an denen sich jeweils wenigstens eine Batterie anschließen lässt; wenigstens einer elektrischen Last, die elektrisch mit den Batterieanschlüssen verbunden oder verbindbar ist; einer Steuereinrichtung, die ausgebildet ist, um die Batterieanschlüsse in Abhängigkeit von einer Entladespannung mit der wenigstens einen elektrischen Last zu verbinden, wobei jeder Batterieanschluss einen mit der Steuereinrichtung verbundenen Schalter aufweist, über den der jeweilige Batterieanschluss elektrisch mit der wenigstens einen elektrischen Last verbunden oder verbindbar ist.

Batterien, beispielsweise Lithium-Ionen-Batterien eines Elektrofahrzeuges, müssen vor dem Recycling möglichst vollständig entladen sein, da sie anderenfalls Feuer fangen oder explodieren können. Auch birgt eine zu hohe Restspannung einer für ein Recycling vorgesehenen Batterie die Gefahr eines Stromschlages. Ferner sind das vollständige Entladen und Kurzschließen von Hochvolt-Batterien vor dem Transport notwendig.

Eine sorgfältige Entladung stellt daher einen ersten wichtigen Schritt im Recycling von Batterien dar. Die Entladung ist so vorzunehmen, dass weder die Batterie noch die Entladevorrichtung noch deren Bedienpersonal Schaden nehmen können.

Aus dem Stand der Technik sind unterschiedliche Entladevorrichtungen für einzelne Batterien bekannt, bei denen die in der Batterie gespeicherte Restladung über einen ohmschen Widerstand geleitet und in Abwärme umgewandelt wird.

Es gibt ferner Entladevorrichtungen, mit denen mehrere Batterien simultan entladen werden können. Da die elektrische Verschaltung mehrerer Akkumulatoren mit unterschiedlichen Ladezuständen ein erhebliches Gefahrenpotential birgt, ist es dabei sehr wichtig, die unterschiedlichen Ladezustände der zu entladenden Akkumulatoren zu kennen und bei der gemeinsamen Entladung schaltungstechnisch sicher zu berücksichtigen.

Eine gattungsgemäße Entladevorrichtung zur gleichzeitigen Entladung mehrere Akkumulatoren ist in der Druckschrift DE 10 2020 118 418 A1 vorgeschlagen. Die dort offenbarte Entladevorrichtung weist mehrere Akku-Anschlüsse zum Anschluss jeweils eines Akkumulators auf. Die einzelnen Akkumulatoren sind in Reihe geschalten und werden gleichzeitig über eine gemeinsame elektrische Last entladen. Während der Entladung wird an jedem Akkumulator kontinuierlich dessen Akku-Spannung gemessen. Unterschreitet die Akku-Spannung einen vorgegebenen Minimalwert, wird der entsprechende Akkumulator aus der Reihenschaltung entfernt, um eine gefährliche Umpolung des Akkumulators zu verhindern.

Ein Nachteil der obigen Entladevorrichtung liegt darin, dass für einen sicheren Betrieb kontinuierlich die Akkuspannung eines jeden Akkumulators überwacht und jeder Akkumulator rechtzeitig vor Umpolung aus der Reihenschaltung entfernt werden muss. Entsprechend aufwändig ist die Entladevorrichtung konstruiert, da jeder Akku-Anschluss einen eigenen Spannungsmesser aufweisen muss.

Wird ein Akkumulator durch einen Bedienfehler oder durch technisches Versagen nicht rechtzeitig vor Umpolung aus der Reihenschaltung entfernt, besteht Explosions- und Brandgefahr.

Für einen wirtschaftlichen Betrieb der komplexen Anlage müssen entladene Akkumulatoren möglichst rasch von der Vorrichtung getrennt und durch neue, zu entladende Akkumulatoren ersetzt werden. Dies hat einen entsprechend erhöhten Personalaufwand zur Folge.

Davon ausgehend ist es die Aufgabe der vorliegenden Erfindung, eine Lösung zu schaffen, welche die Nachteile des bekannten Standes der Technik überwindet. Dazu wird ein vereinfachtes Verfahren und eine vereinfachte Entladevorrichtung vorgeschlagen, mit der sich beliebig viele Altbatterien gleichzeitig und sicher entladen lassen.

Die Aufgabe wird erfindungsgemäß durch eine Batterie-Entladevorrichtung mit den Merkmalen des unabhängigen Hauptanspruches gelöst. Vorteilhafte Weiterbildungen der Erfindung sind in den abhängigen Ansprüchen angegeben.

Die Batterie-Entladevorrichtung weist mehrere Batterieanschlüsse auf, an denen sich jeweils wenigstens eine Batterie anschließen lässt. Die Batterie-Entladevorrichtung weist ferner wenigstens eine elektrische Last, die elektrisch mit den Batterieanschlüssen verbunden oder verbindbar ist und eine Steuereinrichtung, die ausgebildet ist, um die Batterieanschlüsse in Abhängigkeit von einer Entladespannung mit der wenigstens einen elektrischen Last zu verbinden, auf. Jeder Batterieanschluss weist einen mit der Steuereinrichtung verbundenen Schalter auf, über den der jeweilige Batterieanschluss elektrisch mit der wenigstens einen elektrischen Last verbunden oder verbindbar ist. Die Batterieanschlüsse sind zueinander parallel geschalten.

Die Batterieanschlüsse dienen jeweils der Aufnahme wenigsten einer Batterie. Dazu wird die wenigstens eine Batterie entweder manuell oder durch einen Roboter oder durch eine sonstige Zuführautomatik an den jeweiligen Batterieanschluss geklemmt, gesteckt oder anderweitig elektronisch kontaktiert.

Bei der wenigstens einen Batterie handelt es sich entweder um eine(n) einzelne Batterie/Akkumulator oder um mehrere Batterien/Akkumulatoren, die, in Reihe geschaltet, zu einem Batteriemodul zusammengefügt sind und am Batterieanschluss des Entladers angeschlossen werden.

Die Batterieanschlüsse weisen jeweils einen Schalter auf. Bei einem geschlossenen Schalter sind die Batterieanschlüsse parallel zueinander geschalten, so dass an jedem Batterieanschluss eine gleiche elektrische Entladespannung anliegt. Bei geöffnetem Schalter ist der jeweilige Batterieanschluss sowie die an diesem angeschlossene wenigstens eine Batterie nicht elektrisch mit den übrigen Batterieanschlüssen verbunden.

Die Schalter sind entweder direkt oder indirekt mit einer Steuereinrichtung verbunden. Die Steuereinrichtung öffnet und schließt die Schalter automatisch. Beispielsweise handelt es sich bei den Schaltern um Schütze oder um Relais, die über eine entsprechende Schaltung automatisch von der Steuereinrichtung betätigt werden. Die Steuereinrichtung ist so ausgebildet, dass sie die Schalter in Abhängigkeit von der Entladespannung schaltet. Die Steuereinrichtung ist elektronisch, z. B. über Kabel, drahtlos und/oder über weitere elektronische Komponenten, direkt oder indirekt mit den Schaltern verbunden. Die Steuereinrichtung weist einen Signaleingang der gemessenen Entladespannung auf. Der Steuereinrichtung ist ein Datenspeicher zugeordnet, d.h. ein Datenspeicher ist in der Steuereinrichtung integriert oder mit dieser verbunden. Bei der Steuereinrichtung handelt es sich beispielsweise um eine speicherprogrammierbare Steuereinrichtung (SPS), einen Prozessor mit einem integrierten beschreibbaren Speicher, einen mit einem Datenspeicher verbundenen Prozessor oder einen Computer.

Zum Entladen einer der Batterien wird der Schalter des entsprechenden Batterieanschlusses geschlossen und die daran angehängte Batterie mit wenigstens einer elektrischen Last verbunden.

Durch eine entsprechende Schaltung lassen sich einzelne Batterien oder einige der Batterien oder alle Batterien gleichzeitig mit der wenigstens einen elektrischen Last verbinden und über diese entladen.

Die erfindungsgemäße Batterie-Entladevorrichtung eignet sich insbesondere für eine batchweise Entladung mehrerer Batterien. Dazu wird im Vorfeld der Entladung von jeder der zu entladenden Batterien deren elektrischer Zustand, vorzugsweise deren Batteriespannung, bestimmt. Typischerweise sind die Batteriespannungen, dass heißt, die Restspannungen auf den zu recycelnden Batterien sehr unterschiedlich, da jede der zu recycelnden Batterien eine andere Restladung und damit ein anderes Spannungsband aufweist. Die Batteriespannung und/oder Restladung kann beispielsweise manuell bestimmt werden, bevor die Batterie an dem entsprechenden Batterieanschluss angeschlossen wird oder sie kann automatisch bestimmt werden, nachdem die Batterie angeschlossen wurde. Beispielsweise kann die Batteriespannung einer jeden Batterie vor einem Entladungsdurchgang an der Batterie-Entladevorrichtung durch eine automatische Routine bestimmt werden. Die Batteriespannung einer jeden der an die Batterie-Entladevorrichtung angeschlossenen Batterien wird in dem der Steuereinrichtung zugeordneten Datenspeicher gespeichert.

Zum Beginn der Entladung mehrerer Batterien wird zunächst die Batterie mit der größten Batteriespannung durch Schließen des Schalters des entsprechenden Batterieanschlusses mit der wenigstens einen elektrischen Last verbunden. Im Zuge der Entladung sinkt die Batteriespannung und somit die Entladespannung kontinuierlich ab. Mit dem Absinken der Entladespannung verringert sich jeweils eine Differenz zwischen der Entladespannung und den jeweiligen Batteriespannungen der übrigen Batterien. Beim Unterschreiten eines vorgegebenen Grenzwertes für die zwischen der jeweiligen Batteriespannung und der Entladespannung vorhandenen Differenz schließt die Steuereinrichtung automatisch den Schalter des jeweiligen Batterieanschlusses, um auch diesen Batterieanschluss mit der daran angeschlossenen Batterie mit der wenigstens einen elektrischen Last zu verbinden. Dadurch, dass die Batterieanschlüsse parallel zueinander geschalten sind, liegt an allen mit der wenigstens einen elektrischen Last verbundenen Batterieanschlüssen die gleiche Entladespannung an.

Im Verlauf des Entladevorgangs eines Batches mit mehreren zu entladenden Batterien wird also zunächst die Batterie mit der höchsten Batteriespannung entladen und die übrigen Batterien entsprechend ihrer Batteriespannungen sukzessive parallelgeschalten, bis auch die Batterie des Batches mit der geringsten Batteriespannung mit der wenigstens einen elektrischen Last verbunden und entladen wird. Der nächste Batch kann währenddessen zum Anschluss präpariert werden. Entsprechend ist die Steuereinrichtung ausgebildet, um im Verlauf eines Entladevorgangs zunächst die Batterie mit der höchsten Batteriespannung mit der elektrischen Last zu verbinden und die übrigen Batterien entsprechend ihrer Batteriespannungen sukzessive parallelzuschalten, sobald eine Differenz zwischen der Entladespannung und der jeweiligen Batteriespannung einer der übrigen Batterien einen vorgegebenen Grenzwert unterschreitet.

Die erfindungsgemäße Batterie-Entladevorrichtung hat eine Reihe von Vorteilen:
Durch die vorzugsweise batchweise Entladung mehrerer Batterien ist der Personalaufwand für eine Bedienung sehr gering.

Durch die sukzessive Parallelschaltung der Batterieanschlüsse entsprechend der vorherrschenden Entladespannung verläuft die Entladung der einzelnen Batterien trotz anfänglich unterschiedlicher Ladezustände sehr sicher und ohne die Gefahr eines Umpolens der einzelnen Batterien.

Sie ist einfacher aufgebaut als die aus dem Stand der Technik bekannten Batterie-Entladevorrichtungen und kommt beispielsweise mit nur einem Spannungsmesser aus, um die an allen Batterieanschlüssen gleichanliegende Entladespannung zu bestimmen. Durch den einfacheren Aufbau ist die Batterie-Entladevorrichtung weniger störanfällig und preiswerter in der Herstellung.

Vorzugsweise ist die Entladespannung eine Spannung, die über der wenigstens einen elektrischen Last abfällt. Das heißt, die Entladespannung wird entweder direkt an der wenigstens einen elektrischen Last oder in spannungsrichtiger Parallelschaltung zu dieser gemessen.

In einer vorteilhaften Weiterbildung der Erfindung ist den Batterieanschlüssen jeweils ein Temperatursensor zugeordnet. Der Temperatursensor ist beispielsweise mit der Steuereinrichtung verbunden. Bei einem übermäßigen Erhitzen einer Batterie, wird diese durch Öffnen des Schalters vom Stromkreis getrennt und somit ein mögliches Durchbrennen verhindert.

Die wenigstens eine elektrische Last ist beispielsweise so ausgebildet, um eine elektrische Leistung in ein externes Stromnetz einzuspeisen. Durch Verwendung einer so ausgebildeten elektrischen Last wird die Restladung der Batterien einem Gleichstromkreis oder, nach entsprechender Umwandlung, in ein Wechselstromkreis, beispielsweise in ein Haushaltsnetz oder öffentliches Leitungsnetz, eingespeist.

Bei den Batterien handelt es sich beispielsweise um Lithium-Ionen-Akkumulatoren eines Elektrofahrzeugs. In diesem Fall lässt sich die erfindungsgemäße Vorrichtung sehr vorteilhaft beim Recycling einer immer größer werdenden Flut von erschöpften Fahrzeugbatterien einsetzten.

Für eine sichere und bedienerfreundliche Handhabung der Batterie-Entladevorrichtung erweist es sich als vorteilhaft, wenn die Batterieanschlüsse jeweils ein Batterieanschlusskabel aufweisen, das an einem arretierbaren Federzug hängt. Beim Federzug, auch Balancer genannt, handelt es sich um einen Gewichtsausgleich zur Kompensation einer Gewichtskraft der Batterieanschlusskabel der Batterieanschlüsse durch eine entgegengesetzte Kraft, die durch ein Gegengewicht, Federkraft, Hydraulik, Pneumatik oder einen Antrieb erzeugt werden kann. Durch den Federzug kann das Batterieanschlusskabel nach oben gehalten werden, wenn keine Batterie daran angeschlossen ist. Somit ist für einen sicheren und übersichtlichen Arbeitsbereich ohne störende Kabel gesorgt. Beim Anschließen einer Batterie an einen der Batterieanschlüsse kann das Batterieanschlusskabel einfach gegriffen und nach unten an die Batterie, die beispielsweise auf einem Tischwagen an die Batterie-Entladevorrichtung herangefahren wird, herangezogen und an diese angeschlossen werden. Der Federzug ist vorzugsweise arretierbar, um ein ungewolltes Zurückfahren des Federzuges zu verhindern.

Die Aufgabe wird ferner durch ein Verfahren zum Entladen mehrerer Batterien mit folgenden Schritten gelöst:
- Anschließen mehrerer Batterien an eine erfindungsgemäße Batterie-Entladevorrichtung;
- Bestimmen einer Batteriespannung für jede der Batterien;
- Automatisches Verbinden der Batterien mit der wenigstens einen elektrischen Last, sobald eine Differenz zwischen der Entladespannung und der Batteriespannung der jeweiligen Batterie einen vorgegebenen Grenzwert unterschreitet.

Die erfindungswesentlichen Verfahrensschritte wurden bereits im Zusammenhang mit der Batterie-Entladevorrichtung weiter oben in der Beschreibung erläutert, worauf an dieser Stelle noch einmal verwiesen wird.

Es erweist sich als vorteilhaft, dass die Batterien kurzgeschlossen werden, sobald die Entladespannung einen Minimalwert unterschreitet. Beispielsweise lassen sich sämtliche Batterien eines Batchs für eine vollständige Restentladung kurzschließen, sobald die Entladespannung 2 V unterschritten hat, um anschließend beispielsweise für wenigstens eine halbe Stunde oder wenigstens eine Stunde in einem kurzgeschlossen Zustand zu verbleiben, bevor sie weiterverarbeitet werden. Die Batterien können vorzugsweise in einem kurzgeschlossenen Zustand von der Batterie-Entladevorrichtung entnommen werden, um sich getrennt von der Batterie-Entladevorrichtung vor einer anschließenden Weiterverarbeitung vollständig zu entladen.

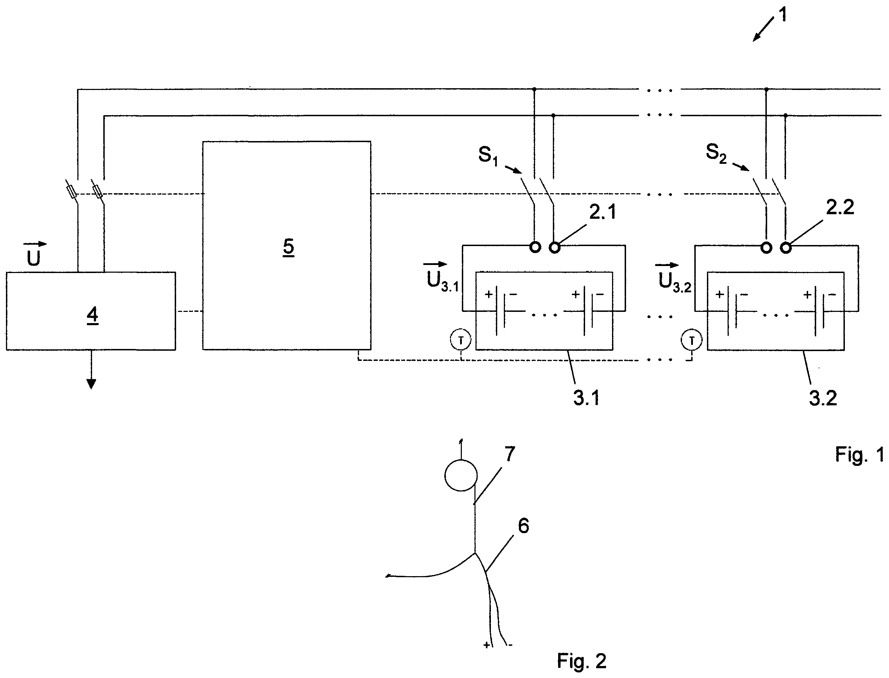

Im Folgenden wird die Erfindung anhand einer Ausführungsform näher erläutert. Dazu ist in Figur 1 schematisch ein stark vereinfachtes Schaltbild einer Ausführungsform der erfindungsgemäßen Batterie-Entladevorrichtung gezeigt. In Figur 2 ist eine Ausführungsform eines Federzuges mit einem daran angehängten Batterieanschlusskabel dargestellt.

Der besseren Übersichtlichkeit halber ist das in der Figur 1 gezeigte Schaltbild auf die wesentlichsten Elemente, die zur Ausführung der Erfindung notwendig sind, reduziert. Der Fachmann erkennt, dass sich das gezeigte Schema unter Wahrung der erfindungsgemäßen Lehre dem konkreten Anwendungszweck entsprechend modifizieren und um weitere technische Komponenten ergänzen lässt.

In Figur 1 ist eine Ausführungsform der erfindungsgemäßen Batterie-Entladevorrichtung 1 mit mehreren parallelgeschalteten Batterieanschlüssen 2.1, 2.2 gezeigt. Der besseren Übersichtlichkeit halber sind in dem in der Figur 1 gezeigten Schaltbild nur zwei Batterieanschlüsse 2.1, 2.2 dargestellt. Wie es jedoch durch die gepunktete Linienunterbrechung angedeutet ist, lassen sich bei der gezeigten Ausführungsform beliebig viele Batterieanschlüsse 2.1, 2.2 parallelschalten. Damit ist es ohne weiteres möglich mehr als zwei Batterien 3.1, 3.2 für eine gleichzeitige Entladung parallelzuschalten. Die nachfolgenden Ausführungen sind daher nicht auf zwei Batterieanschlüsse beschränkt.

An jedem der Batterieanschlüsse 2.1, 2.2 ist eine Batterie/Akkumulator 3.1, 3.2 angeschlossen. Jede der Batterien 3.1, 3.2 besteht bei der in Figur 1 gezeigten Ausführungsform aus mehreren galvanischen Zellen, die jeweils zu einem Batteriemodul in Reihe geschaltet sind. Vorliegend handelt es sich bei den Batterien 3.1, 3.2 um Lithium-lonen-Batterien aus einem Elektrofahrzeug. Die Erfindung ist jedoch keinesfalls nur auf solche Batterien beschränkt. Vielmehr lassen sich sämtliche Elektrobatterien an der erfindungsgemäßen Batterie-Entladevorrichtung entladen.

Die gezeigte Ausführungsform weist eine steuerbare elektrische Last 4 auf, über die die Batterien 3.1, 3.2 entladen werden. Vorliegend handelt es sich bei der elektrischen Last 4 um einen Wechselrichter, der die als Gleichspannung anfallende Restladung der Batterien 3.1, 3.2 in Wechselstrom umwandelt und in ein Gebäudestromnetz einspeist.

Die Batterieanschlüsse 2.1, 2.2 weisen jeweils einen Schalter S₁, S₂ auf. Bei geschlossenen Schaltern S₁, S₂ sind die Batterieanschlüsse 2.1, 2.2 sowie die daran angeschlossenen Batterien 3.1, 3.2 miteinander parallel geschalten und mit der gemeinsamen Last 4 verbunden. Die Schaltung der Schalter S₁, S₂ erfolgt über eine Steuereinrichtung 5, die mit den Schaltern S₁, S₂ verbunden ist.

Die Steuereinrichtung 5 weist einen Signaleingang für eine über der Last 4 abfallende Entladespannung U auf. Die gleiche Entladespannung U liegt bei geschlossenem Schalter S₁, S₂ auch an den parallelgeschalteten Batterieanschlüssen 2.1, 2.2 an.

Die Steuereinrichtung 5 ist vorliegend eine speicherprogrammierbare Steuereinrichtung (SPS) mit einem integrierten Datenspeicher, in dem eine vorab bestimmte Batteriespannung U_{3.1}, U_{3.2} der Batterien 3.1, 3.2 gespeichert ist. Die einzelnen Batteriespannungen U_{3.1}, U_{3.2} werden vorab einer Entladung eines Batteriebatches gemessen und automatisch oder manuell über eine nicht in Figur 1 gezeigte mit der Steuereinrichtung 5 verbundene Eingabeeinrichtung in dem Datenspeicher der SPS abgespeichert.

Beginnend bei der Batterie 3.1, 3.2 mit der höchsten Batteriespannung U_{3.1}, U_{3.2} schließt die Steuereinheit 5 den jeweiligen Schalter S₁, S₂, um diese mit der Last 4 zu verbinden. Alle übrigen Batterien 3.1, 3.2 mit anfänglich geringerer Batteriespannung U_{3.1}, U_{3.2} bleiben vorerst von der Last 4 getrennt. Die über der Last 4 abfallende Entladespannung U klingt im Zuge der Entladung ab, bis nach und nach weitere Batterien 3.1, 3.2 automatisch von der Steuereinheit 5 mit der Last 4 verbunden werden.

Als Kriterium dafür, wann die jeweilige Batterie 3.1, 3.2 mit der Last 4 verbunden werden kann, dient vorliegend eine Differenz zwischen der Entladespannung U und der jeweiligen Batteriespannung U_{3.1}, U_{3.2}, die einen vorgegebenen Grenzwert unterschreiten muss.

Sind alle Batterien 3.1, 3.2 mit der Last 4 verbunden und hat die Entladespannung U einen vorgegebenen Minimalwert unterschritten, können die Batterien 3.1, 3.2 gefahrlos kurzgeschlossen und eine vollständige Restentladung der kurzgeschlossenen Batterien 3.1, 3.2 abgewartet werden.

Den Batterieanschlüssen 2.1, 2.2 ist jeweils ein optionaler Temperatursensor T zugeordnet. Die Temperatursensoren T sind mit der Steuereinrichtung 5 verbunden. Sie messen fortlaufend eine Temperatur der angeschlossenen Batterie 3.1, 3.2 und geben ein entsprechendes Temperatursignal an die Steuereinrichtung 5 weiter. Ist die Temperatur außerhalb einer festgelegten Toleranz wird die entsprechende Batterie 3.1, 3.2 automatisch vom Stromkreis getrennt.

Die in Figur 1 nur schematisch und stark vereinfacht dargestellte Ausführungsform der erfindungsgemäßen Batterie-Entladevorrichtung 1 lässt sich, bei entsprechender stromflussgerechter Auslegung der Leiterkabel, auf zweckmäßig viele parallel geschaltete Batterieanschlüsse ausweiten. Auch lässt sich die Batterie-Entladevorrichtung 1 um zusätzliche Komponenten, wie beispielsweise Anzeigeelemente zur Statusanzeige, Sicherheitseinrichtungen zur Notabschaltung, Sensoren zur Funktionsüberwachung, Eingabe-, Übertragungs-, Speicher- und Verarbeitungseinrichtungen zur Eingabe, Übertragung, Speicherung und Verarbeitung von Daten, erweitern. Neben der Entladung von Batteriemodulen ist auch das Entladen von ganzen Batteriepacks möglich. Es müssen hierfür lediglich die jeweiligen Batterieanschlüsse durch ausreichend dimensionierte Leiterquerschnitte für entsprechend hohe Stromstärken ausgelegt werden.

In Figur 2 ist eine Ausführungsform eines Federzuges 7 mit einem daran anhängenden Batterieanschlusskabel 6 gezeigt. Der Federzug 7 kompensiert das Gewicht des Batterieanschlusskabels 6 und entlastet dieses von Zugkräften. Ohne anhängende Batterie 3.1, 3.2 wird das Batterieanschlusskabel 6 eines Batterieanschlusses 2.1, 2.2 nach oben gehalten. Nachdem eine Batterie 3.1, 3.2 herangefahren wurde, wird das Batterieanschlusskabel 6 soweit an die Batterie 3.1, 3.2 herangezogen, dass es sich gut mit den Batteriepolen verbinden lässt. Eine Arretierung im Federzug 7 verhindert, dass das Batterieanschlusskabel 6 durch ein Zurückfahren des Federzuges 7 von der Batterie 3.1, 3.2 abgezogen wird. Der Federzug 7 ist optional und stellt eine nützliche Weiterbildung der erfindungsgemäßen Batterie-Entladevorrichtung dar, die die Handhabung und die Bediensicherheit weiter steigert.

### Bezugszeichenliste

- 1: Batterie-Entladevorrichtung
- 2.1, 2.2: Batterieanschlüsse
- 3.1, 3.2: Batterien
- 4: elektrische Last
- 5: Steuereinrichtung
- U: Entladespannung
- U_{3.1}, U_{3.2}: Batteriespannung
- S₁, S₂: Schalter
- 6: Batterieanschlusskabel
- 7: Federzug mit Arretierung

## Patentansprüche

1. Batterie-Entladevorrichtung (1) mit mehreren Batterieanschlüssen (2.1, 2.2), an denen sich jeweils wenigstens eine Batterie (3.1, 3.2) anschließen lässt; wenigstens einer elektrischen Last (4), die elektrisch mit den Batterieanschlüssen (2.1, 2.2) verbunden oder verbindbar ist; einer Steuereinrichtung (5), die ausgebildet ist, um die Batterieanschlüsse (2.1, 2.2) in Abhängigkeit von einer Entladespannung (U) mit der wenigstens einen elektrischen Last (5) zu verbinden, wobei jeder Batterieanschluss (2.1, 2.2) einen mit der Steuereinrichtung (5) verbundenen Schalter (S₁, S₂) aufweist, über den der jeweilige Batterieanschluss (2.1, 2.2) elektrisch mit der wenigstens einen elektrischen Last verbunden oder verbindbar ist, **dadurch gekennzeichnet, dass** die Batterieanschlüsse (2.1, 2.2) zueinander parallel geschalten sind.

2. Batterie-Entladevorrichtung nach Anspruch 1, **dadurch gekennzeichnet, dass** die Entladespannung (U) eine Spannung ist, die über der wenigstens einen elektrischen Last (4) abfällt.

3. Batterie-Entladevorrichtung nach Anspruch 1 oder 2, **dadurch gekennzeichnet, dass** den Batterieanschlüssen (2.1, 2.2) jeweils ein Temperatursensor (T) zugeordnet ist.

4. Batterie-Entladevorrichtung nach einem der vorhergehenden Ansprüche, **dadurch gekennzeichnet, dass** die wenigstens eine elektrische Last (4) so ausgebildet ist, um eine elektrische Leistung in ein externes Stromnetz einzuspeisen.

5. Batterie-Entladevorrichtung nach einem der vorhergehenden Ansprüche, **dadurch gekennzeichnet, dass** die Batterien (3.1, 3.2) Lithium-Ionen-Akkumulatoren eines Elektrofahrzeugs sind.

6. Batterie-Entladevorrichtung nach einem der vorhergehenden Ansprüche, **dadurch gekennzeichnet, dass** die Batterieanschlüsse (2.1, 2.2) jeweils ein Batterieanschlusskabel (6) aufweisen, das an einem arretierbaren Federzug (7) hängt.

7. Verfahren zum Entladen mehrerer Batterien (3.1, 3.2) mit folgenden Schritten:
- Anschließen mehrerer Batterien (3.1, 3.2) an eine Batterie-Entladevorrichtung (1) gemäß einem der Ansprüche 1 bis 6;
- Bestimmen einer Batteriespannung (U_{3.1}, U_{3.2}) für jede der Batterien (3.1, 3.2);
- Automatisches Verbinden der Batterien (3.1, 3.2) mit der wenigstens einen elektrischen Last (4), sobald eine Differenz zwischen der Entladespannung (U) und der Batteriespannung (U_{3.1}, U_{3.2}) der jeweiligen Batterie (3.1, 3.2) einen vorgegebenen Grenzwert unterschreitet.

8. Verfahren nach Anspruch 7, **dadurch gekennzeichnet, dass** die Batterien (3.1, 3.2) kurzgeschlossen werden, sobald die Entladespannung (U) einen Minimalwert unterschreitet.
